# EUROPÄISCHE PATENTANMELDUNG

(11) **EP 0 679 004 A2**
(43) Veröffentlichungstag der Anmeldung: **25.10.1995**
(21) Anmeldenummer: 95104362.9
(22) Anmeldetag: 24.03.1995
(51) Int. Cl.: H04M 3/24, H04Q 1/20, G06F 11/00, G06F 9/44

(54) **Verfahren zum Testen von Fernmeldeanlagen oder Teilen davon und eine Vorrichtung zur Durchführung des Verfahrens**

(30) Priorität: 20.04.1994 CH 1211/94
(71) Anmelder: Siemens Schweiz AG, CH-8047 Zürich (CH)
(72) Erfinder: Favre, Pascal, CH-1800 Vevey (CH)

(57) **Zusammenfassung**

Aus mindestens zwei Klassen (A, B) bestehende objektorientierte Systeme (SDLSU), wie beispielsweise ein Fernmeldesystem oder Teile davon, werden derart getestet, dass einzelne Klassen (B) durch eine Testumgebung bzw. eine Testverwaltungseinheit (TM) ersetzt werden, die selbst wiederum eine Klasse ist. Die Testverwaltungseinheit (TM) bildet dabei sämtliche für den Prüfling (TL) bzw. für die Klasse (A) relevanten Meldungen (Mk, Mi) nach. Während die vom Prüfling (TL) stammenden Meldungen (Mk) in die Meldungen (Mm) umgewandelt und an die Testverwaltungseinheit (TM) umgeleitet werden, werden die an den Prüfling (TL) gerichteten Meldungen (Mi) von der Testverwaltungseinheit (TM) erzeugt. Für die korrekte Zuweisung der Meldungen (Mk, Mi, Mm) wird eine Prozessverwaltungseinheit (PM) verwendet, über die sämtliche Meldungen (Mk, Mi, Mm) des objektorientierten Systems (SDLSU) geführt werden. Die Prozessverwaltungseinheit (PM) enthält ferner eine Warteliste (QU), in die die Meldungen (Mk, Mi, Mm) bis zu deren Weiterverarbeitung abgelegt werden.
Zwischen der Testverwaltungseinheit (TM) und der Prozessverwaltungseinheit (PM) ist eine sogenannte SDL++- Schnittstelle vorhanden, die mit Hilfe der objektorientierten Programmiersprache SDL++ (Specification and Description Language) definiert wird. Ein erstes Übersetzungsprogramm übersetzt die mit SDL++ definierten Vorgänge an dieser Schnittstelle in eine zweite höhere Programmiersprache, in der auch die Abläufe im Prüfling (TL) programmiert sein können. Schliesslich werden mit einem zweiten Übersetzungsprogramm sowohl die Abläufe im Prüfling (TL) als auch diejenigen in der Testverwaltungseinheit (TM) in eine maschinenlesbare Form übersetzt und miteinander verbunden.

## Beschreibung

Die vorliegende Erfindung betrifft ein Verfahren nach dem Oberbegriff des Patentanspruchs 1 sowie eine Vorrichtung zur Durchführung des Verfahrens.

Um die Funktionsfähigkeit von einzelnen oder mehreren miteinander verbundenen Softwaremodulen überprüfen zu können, sind Testumgebungen notwendig, die die fehlenden, für einen vollständigen Testlauf aber unabdingbaren Teile eines Systems nachbilden. Bei der Realisierung von komplexen Systemen - wie beispielsweise eines Q3- Adapters eines Telekommunikationssverwaltungsnetzwerkes (TMN - Telecommunication Management Network) in einer Fernmeldeanlage (siehe CCITT- Empfehlung M.30 bzw. M.3010, CCITT Blue Book, Volume IV - Fascicle IV.1, IXth Plenary Assembly, Geneva 1989) - ist eine systematische Überprüfung von Systemteilen vor einem Integrationstest zur frühzeitigen Elimination von Fehlern von grosser Bedeutung. Wird ein System erst nach der Gesamtintegration aller Systemteile getestet, ist ein Lokalisieren von Fehlern meist mit grossen Schwierigkeiten verbunden, da die Ursachen sowohl in einem Systemteil als auch in einer Inkompatibilität von zwei oder mehreren verknüpften Systemteilen liegen können. Es empfiehlt sich daher ein schrittweises Inbetriebnehmen und Testen von Systemteilen bevor eine Integration des Gesamtsystems vorgenommen wird.

Beim oben erwähnten Q3- Adapter eines Telekommunikationsverwaltungsnetzwerkes, dessen Realisierung beispielsweise in der Schweizer Patentanmeldung 00997/93-6 beschrieben ist, ist eine systematische Überprüfung der Funktionsweise wegen der grossen Anzahl von Teilsystemen von grosser Bedeutung. Die Durchführung von Tests an aus solchen Teilsystemen bestehenden Prüflingen ist jedoch aufwendig, da für jedes zu testende Teilsystem eine separate Testumgebung erstellt werden muss. Dazu gehört auch die Eingabe sämtlicher zwischen der Testumgebung und dem Prüfling mittels Meldungen zu übertragenden Daten, die demnach vor dem Testlauf vorbereitet werden müssen.

Der vorliegenden Erfindung liegt daher die Aufgabe zugrunde, ein Verfahren zum Prüfen von Systemen oder Teilen davon anzugeben, bei dem auszutauschende Meldungen auf einfache Weise definiert werden können und bei dem die Anzahl der durch die Meldungen verursachten Fehler gering ist.

Diese Aufgabe wird durch die im kennzeichnenden Teil des Patentanspruchs 1 angegebenen Massnahmen gelöst. Vorteilhafte Ausgestaltungen der Erfindung sowie eine Vorrichtung zur Durchführung des Verfahrens sind in weiteren Ansprüchen angegeben.

Die Erfindung weist folgende Vorteile auf: Schnittstellen von zu testenden Klassen eines objektorientierten Systems werden mit Hilfe von Testumgebungen bzw. Testverwaltungseinheiten nachgebildet, die selber Klassen darstellen, jedoch lediglich die Schnittstellen zu den zu testenden Klassen ersetzen. An der zu testenden Klasse sind keine Änderungen oder Anpassungen vorzunehmen. Fehler aufgrund von Änderungen zu Testzwecken sind beim erfindungsgemässen Verfahren von vorneherein ausgeschlossen oder zumindest auf die Testumgebung reduziert. Zudem wird zur Beschreibung von Testsequenzen eine höhere Programmiersprache verwendet, wodurch die Fehleranfälligkeit bei der Eingabe von Testsequenzen weiter erheblich vermindert wird. Treten beim Ablauf des Tests Fehler auf, so kann somit mit einer hohen Wahrscheinlichkeit daraus geschlossen werden, dass diese Fehler vom Prüfling erzeugt werden.
Ferner wird durch die Verwendung einer Testumgebung für jede Schnittstelle zum Prüfling der Testablauf klar strukturiert. Ist dabei eine Synchronisation von verschiedenen, an den Prüfling gerichteten Meldungen von unterschiedlichen Testumgebungen notwendig, so können diese Meldungen derart gekennzeichnet werden, dass eine Synchronisiereinheit die Synchronisation vornehmen kann.

Die Erfindung wird nachfolgend anhand von Zeichnungen beispielsweise näher erläutert. Dabei zeigt
- Fig. 1: ein prinzipielles Vorgehen beim Testen von Klassen,
- Fig. 2: ein Untersystem, in dem eine Klasse durch eine Testverwaltungseinheit ersetzt wurde,
- Fig. 3: eine Testanordnung bestehend aus einem Prüfling, verschiedenen Testumgebungen und weiteren für den Testablauf benötigten Einheiten,
- Fig. 4: eine in der Testumgebung enthaltene Testverwaltungseinheit und
- Fig. 5: eine SDL++- (Specification and Description Language)- Schnittstelle zwischen der Testumgebung und der Testverwaltungseinheit.

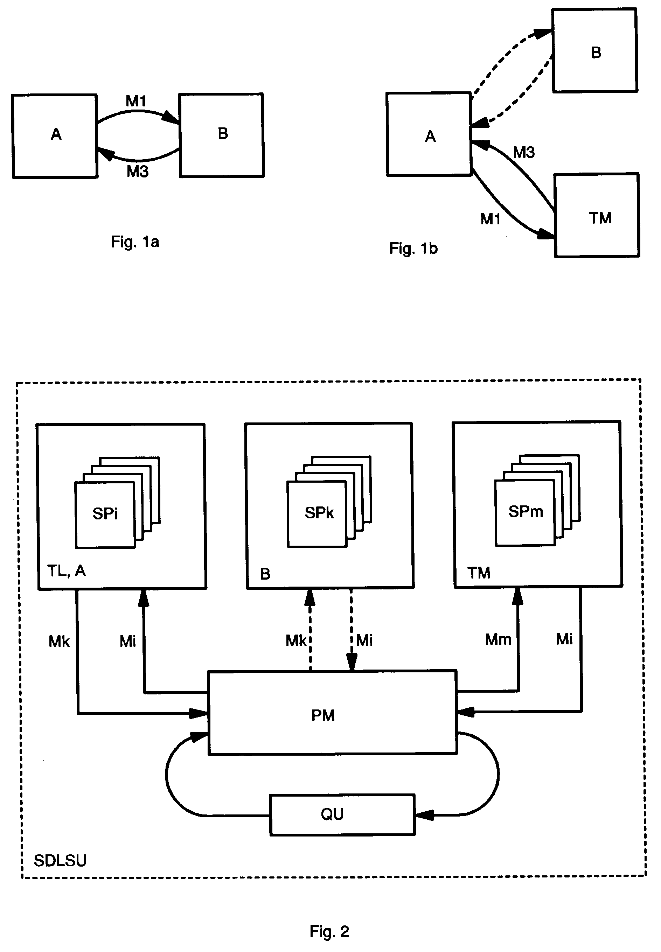

In Fig. 1 wird anhand eines einfachen Beispiels der prinzipielle Einsatz einer Testverwaltungseinheit TM dargestellt. Ausgegangen wird dabei davon, dass es sich bei den zu testenden Systemen um objektorientierte Systeme handelt, wie sie beispielsweise in "Objektooentierte Programmierung mit C++ und Smalltalk" von Josef Mittendorfer (erschienen im Addison- Wesley Verlag, 1989) beschrieben sind. Die in dieser Druckschrift definierten Begriffe - wie zum Beispiel Objekt, Klasse, Instanz, Methode, Meldung oder Vererbung - werden auch in den folgenden Ausführungen in dieser Weise verwendet.

Fig. 1a zeigt zwei Klassen A und B, zwischen denen Meldungen M1 und M3 ausgetauscht werden. In jeder dieser Klassen A und B kann definitionsgemäss eine beliebig komplexe Unterklassenstruktur enthalten sein, dessen Methoden in den Klassen A und B verwendet werden können (Vererbung). Soll nun die Klasse A getestet werden, so wird erfindungsgemäss eine Testverwaltungseinheit TM eingesetzt, die die Klasse B bzw. dessen Schnittstellen nachbildet. In Fig. 1b ist eine solche Testanordnung dargestellt: Die Meldungen M1 und M3 werden nicht mehr zwischen der Klasse A und B ausgetauscht, sonderen zwischen der Klasse A und der Testverwaltungseinheit TM. Die Klasse B wird im Testfall also durch die Testverwaltungseinheit TM ersetzt, die das Empfangen der Meldung M1 von der Klasse A und das Senden der Meldung M3 an die Klasse A übernimmt. Die zu testende Klasse A wird im folgenden auch als Prüfling bezeichnet.

Das in den Fig. 1a und 1b dargestellte Prinzip wird anhand von Fig. 2 im folgenden weiter erläutert: Ein Untersystem SDLSU besteht aus einem Prüfling TL, einer Klasse B, einer Testverwaltungseinheit TM und einer Prozessverwaltungseinheit PM mit einer dazugehörenden Warteliste QU, wobei im Prüfling TL, in der Klasse B und in der Testverwaltungseinheit TM Instanzen SPi, SPk bzw. SPm vorhanden sind. Diese Instanzen SPi, SPk und SPm sind vorzugsweise mit Hilfe einer objektorientierten Programmiersprache wie SDL++ (Specification and Description Language) in Dateien definiert, deren Inhalte mit Hilfe eines ersten Übersetzungsprogramms in die Programmiersprache C++ übersetzt werden. Mit einem zweiten Übersetzungsprogramm werden schliesslich die C++- Programme in eine maschinenlesbare Form übersetzt, wobei die übersetzten Programme des Prüflings TL und der Testverwaltungseinheit TM miteinander verbunden werden. SDL++ enthält gegenüber dem normalen SDL (CCITT RED BOOK Vol. VI - Fascicle VI.10: Functional Specification and Description Language (SDL), Recommendations Z.100 - 104, CCITT, Planary assembly, Malaga-Torremolinos, 8. - 19.10.1984, Geneva, 1985) sämtliche für eine objektorientierte Programmiersprache üblichen Merkmale, die beispielsweise auch in Smalltalk oder C++ vorhanden sind ("Oblektorientierte Programmierung mit C++ und Smalltalk", Josef Mittendorfer, Addison- Wesley Verlag, 1989).

Eine bekannte, auf SDL basierende, funktionsorientierte Werkzeugkette mit dem Namen SIGRAPH-SET-SDL-IS (SIGRAPH-SET-SDL-IS (WS30) V2.0, Implementierungssystem, Benutzeranleitung, Ausgabe Oktober 1990, Siemens Nixdorf Informationssysteme AG) wird - analog zur Erweiterung von SDL zu SDL++ - zu einer objektorientierten Werkzeugkette erweitert (SDL++ - A Toolset for the Object-oriented Development of C++ Software, G. Gries, SDL '93 - Using Objects, Proceedings of the Sixth SDL Forum, Darmstadt, Germany, 11. - 15. Oktober 1993, Elsevier Science Publishers B.V., 1993). Dabei wurden die SDL- Begriffe folgendermassen in objektorientierte SDL++- Begriffe überführt: ein SDL- Prozesstyp wird zu einer SDL- Klasse, ein SDL- Prozess (Instanz) wird zu einer Instanz einer SDL++- Klasse, lokale SDL- Prozessdaten werden zu SDL++- Attributen, ein SDL- Subsystem wird zu einem SDL++- Subsystem, usw.
Der Anwender entwirft statt einzelner SDL- Prozesse eine SDL++- Klassenhierachie mit Einfachvererbung. Zu beachten ist dabei, dass alle Methoden einer SDL++- Klasse asynchron aufgerufen werden.

Wie in Fig. 1b wird auch im Untersystem SDLSU von Fig. 2 die Klasse B durch die Testverwaltungseinheit TM ersetzt. Diese Testverwaltungseinheit TM stellt - wie der Prüfling TL und die Klasse B - eine Klasse im Sinne von objektorientierten Systemen dar. Als Unterschied zu dem in Fig. 1 dargestellten, wo die Klassen A und B bzw. die Testverwaltungseinheit TM Meldungen M1 und M3 direkt miteinander austauschen, erfolgt die Kommunikation im in Fig. 2 dargestellten Untersystem SDLSU über die Prozessverwaltungseinheit PM und über die mit ihr verbundenen Wartelist QU. Dies geschieht nicht nur im dargestellten Testfall, in dem die Meldungen zwischen dem Prüfling TL und der Testverwaltungseinheit TM ausgetauscht werden, sondern auch wenn Meldungen zwischen dem Prüfling TL (Klasse A) und der Klasse B ausgetauscht werden. Sämtliche Meldungen Mi, Mk oder Mm von einer Klasse - sei es vom Prüfling TL, von der Klasse B oder von der Testverwaltungseinheit TM - werden an die Prozessverwaltungseinheit PM übermittelt und vorerst in die Warteliste QU eingetragen. Die Warteliste QU wird von der Prozessverwaltungseinheit PM abgearbeitet, wobei die Meldungen vorzugsweise gemäss ihrer Priorität behandelt werden. Da jede von der Prozessverwaltungseinheit PM zu verarbeitende Meldung Mi, Mk bzw. Mm mit einem Klassenidentifikator versehen ist, kann die Prozessverwaltungseinheit PM die Meldung Mi, Mk bzw. Mm an die gewünschte Empfängerklasse weiterleiten. Soll nun beispielseweise - wie in Fig. 2 dargestellt - die Klasse A getestet werden, so werden Meldungen Mk, die eigentlich an die Klasse B zu übermitteln sind, an die Testverwaltungseinheit TM umgeleitet. In gleicher Weise werden im Testfall die üblicherweise von der Klasse B übermittelten Meldungen Mi von der Testverwaltungseinheit TM generiert und an die Prozessverwaltungseinheit PM übermittelt. Die Meldungen Mk sind also in Meldungen Mm umgewandelt.

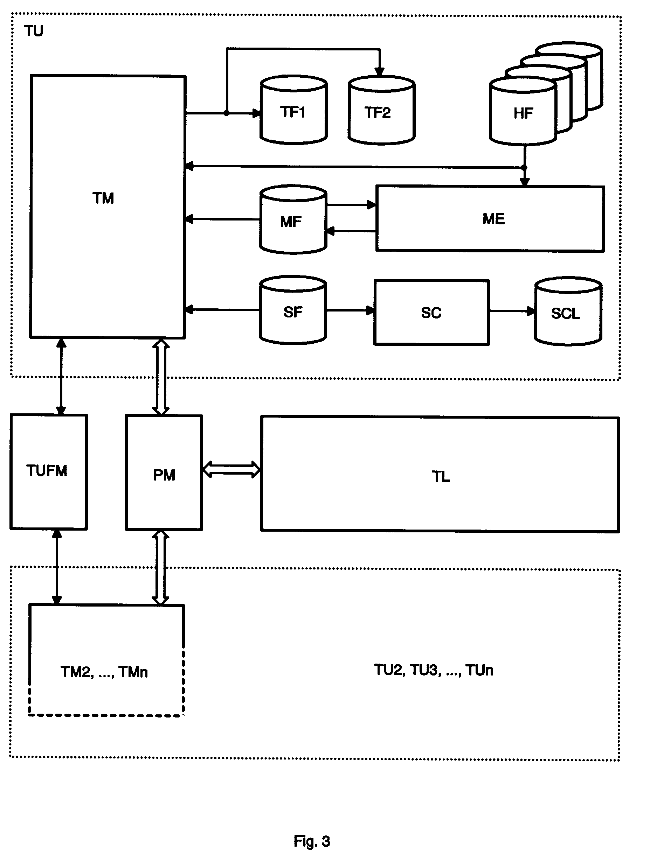

In Fig. 3 ist eine weitere Ausführungsform einer Testanordnung zum Testen eines Prüflings TL dargestellt, die aus einer Prozessveraltungseinheit PM, einer Synchronisiereinheit TUFM und mehreren Testumgebungen TU, TU2 bis TUn besteht. Sämtliche zwischen den Testumgebungen TU, TU2 bis TUn und dem Prüfling TL auszutauschenden Meldungen führen über die Prozessverwaltungseinheit PM, wobei zur Synchronisation der Testumgebungen TU, TU2 bis TUn untereinander die Synchronisiereinheit TUFM vorgesehen ist. Die Testumgebungen TU, TU2 bis TUn bestehen im wesentlichen aus einer zentralen Testverwaltungseinheit TM, aus einer Meldungseingabeeinheit ME und aus einer Syntaxprüfeinheit SC. Dateien, die von diesen Einheiten erstellt bzw. auf die diese zugreifen, sind in Fig. 3 mittels zylinderförmigen Symbolen dargestellt.
Mit einer häufig auch als Editor bezeichneten Eingabeeinheit werden die an den Prüfling TL zu sendenden und die vom Prüfling TL zu empfangenden Meldungen in eine Meldungsfolgedatei SF eingegeben, wobei zu sendende und zu empfangende Datenpakete in den Meldungen referenziert werden. Bei der Erstellung der Meldungsfolgedatei SF werden noch zu erläuternde Anweisungen verwendet, die neben Steuerinformation für die Testumgebung TU auch die Meldungen an den Prüfling TL beschreiben. Zur Überprüfung der Eintragungen in dieser Meldungsfolgedatei SF kann mit Hilfe der Syntaxprüfeinheit SC die Syntax kontrolliert werden, wobei das Ergebnis dieser Überprüfung in einer durch die Syntaxprüfeinheit SC erstellten Meldungssyntaxdatei SCL abgelegt wird.
Schliesslich werden die in der Testphase durchgeführten Tests am Prüfling TL von der Testverwaltungseinheit TM aufgezeichnet und in den beiden Protokolldateien TF1 und TF2 zur weiteren Verarbeitung bzw. zur Analyse des Testablaufs bereitgestellt.

Wie erwähnt, hat die Syntaxprüfeinheit SC die Aufgabe, die Meldungsfolgedatei SF syntaktisch und logisch zu überprüfen. Sie stellt demzufolge ein Hilfsmittel für den Entwickler dar. Bei der Überprüfung der Meldungsfolgedatei SF durch die Syntaxprüfeinheit SC erfolgt keine automatische Änderung der Meldungfolgedatei SF, sondern es werden lediglich Fehler mit Hinweisen zur Behebung in der Meldungssyntaxdatei SCL gespeichert und zur Analyse zur Verfügung gestellt.

Ein mögliches Verfahren zur Eingabe von Daten mit Hilfe der Meldungseingabeeinheit ME wurde in der Schweizer Patentanmeldung mit der Anmeldenummer 03823/93-0 ausführlich beschrieben. Der gesamte Inhalt dieser Druckschrift wird aus diesem Grund ausdrücklich als Bestandteil der vorliegenden Anmeldung betrachtet. Insbesondere ist darin auch die Art und Weise, wie die Daten mit Hilfe von Datentypendateien HF und Meldungsdateien MF dargestellt werden, ausführlich beschrieben.

Die weiteren in Fig. 3 nur andeutungsweise dargestellten Testumgebungen TU2 bis TUn sind im wesentlichen gleich aufgebaut wie die Testumgebung TU, wobei zur Erstellung von entsprechenden Meldungs-, Meldungsfolge- und Meldungssyntaxdateien jeweils die gleichen Meldungseingabeeinheiten ME, die Texteingabeeinheit (Editor) bzw. Syntaxprüfeinheiten SC verwendet werden können.

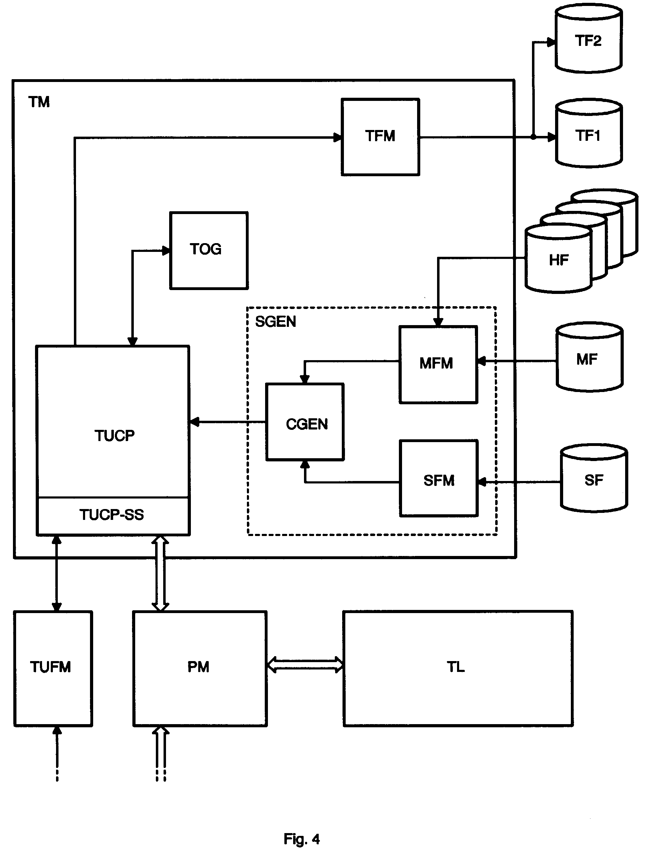

Fig. 4 zeigt den Aufbau der Testverwaltungseinheit TM, die aus einer Befehlsverarbeitungseinheit TUCP mit einer SDL++- Schnittstelle TUCP-SS, einem Protokollgenerator TFM, einer Zeitüberwachungseinheit TOG und einem Sequenzgenerator SGEN besteht, der seinerseits eine Meldungsdateiverarbeitungseinheit MFM, eine Meldungsfolgeverwaltungseinheit SFM und eine Befehlseinheit CGEN enthält.

Sind die Meldungs- MF, die Meldungsfolge- SF und die Datentypendateien HF erstellt und wurde der Testablauf gestartet, so werden alle Befehle der Meldungsfolgedatei SF durch die Meldungsfolgeverwaltungseinheit SFM gelesen, in Meldungsklassen umgewandelt und für die Befehlseinheit CGEN im Speicher als verkettete Liste abgelegt. Anschliessend wird die Befehlseinheit CGEN für jeden in dieser Liste enthaltene Eintrag durch die Befehlsverarbeitungseinheit TUCP aktiviert. Dabei werden die Meldungsklassen der Reihe nach ausgeführt, wobei diese die notwendigen Informationen vorbereiten und an die Befehlsverarbeitungseinheit TUCP weitergeben. Die Befehlsverarbeitungseinheit TUCP kann nunmehr diese Informationen an die SDL++- Schnittstelle TUCP-SS weitergeben, in der die Informationen in eine für die Prozessverwaltungseinheit PM verständliche Form gebracht werden. Insbesondere werden an dieser Stelle die Klassenidentifikatoren der zu erteichenden Klassen - beispielsweise Klasse A (Fig. 1) - richtig gestellt.
Im folgenden ist ein Beispiel für den Inhalt einer Meldungsfolgedatei SF mit dem Namen "notif_disp.session" angegeben: 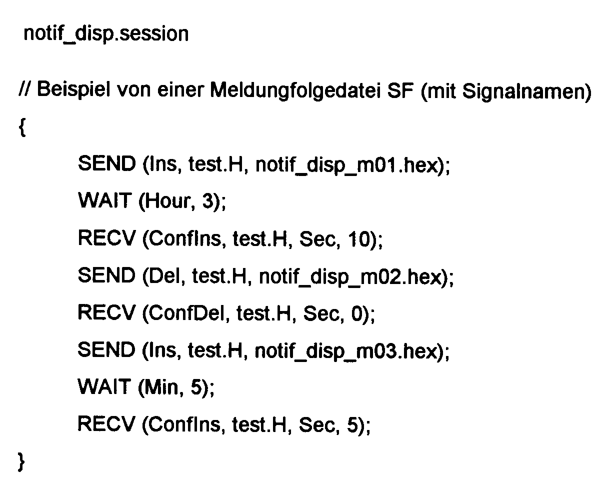
In einer ersten "SEND"- Anweisung wird von der Testumgebung TU an den Prüfling TL eine Meldung "Ins" gesendet, wobei die Datenstruktur der zu übertragenden Daten in der Datentypendatei HF mit dem Namen "test.H" und die Daten selbst in der Meldungsdatei MF mit dem Namen "notif_disp_m01.hex" enthalten sind. Aufgrund dieser Angaben wird in der Meldungsdateiverwaltungseinheit MFM auf die entsprechenden Informationen in der Meldungsdatei MF, nämlich auf "notif_disp_m01.hex", bzw. in der Datentypendatei HF, nämlich auf "test.H", zugegriffen. In der Befehlseinheit CGEN werden die gespeicherten Anweisungen mit den durch die Meldungsdateiverwaltungseinheit MFM referenzierten Daten zu Befehlen verbunden, die in der Befehlsverarbeitungseinheit TUCP ausgeführt werden. Im Sequenzgenerator SGEN erfolgen somit analoge Verfahrensschritte, wie sie mit dem in der Schweizer Patentanmeldung mit der Anmeldenummer 03823/93-0 beschriebenen Verfahren zur Erstellung der Meldungsdatei MF vorgenommen werden.
Die von einer Anweisung ausgelöste Meldungen, die an den Prüfling TL gerichtet sind, werden - wie bereits erwähnt - in die Warteliste QU (Fig. 2) der Prozessverwaltungseinheit PM allenfalls mit anderen, von weiteren Testumgebungen TU2 bis TUn stammenden Meldungen aufgenommen.

Die Befehlsverarbeitungseinheit TUCP ist der eigentliche zentrale Teil der Testverwaltungseinheit TM und hat die Aufgabe, die Anweisungsreihenfolge und den zeitlichen Ablauf des Tests zu überwachen. Ferner sind auch die Synchronisation mit anderen Testumgebungen TU2 bis TUn und das Protokollieren der Tests durch die Befehlsverarbeitungseinheit TUCP vorzunehmen.

Die nächste Anweisung im oben angegebenen Beispiel ist eine "WAIT"- Anweisung. In der Befehlsverarbeitungseinheit TUCP wird nunmehr die Zeitüberwachungseinheit TOG aktiviert, indem die Verarbeitung der nächsten Anweisung durch die Befehlsverarbeitungseinheit TUCP für zehn Minuten verzögert wird. Anstelle von Minuten können auch Sekunden, Stunden oder Tage als Einheiten verwendet werden.

Schliesslich folgt im oben angegebenen Beispiel eine "RECV"- Anweisung, die den Empfang einer vom Prüfling TL zu sendenden, an die Testumgebung TU gerichtete Meldung "Conflns" anzeigt. Die Datenstruktur der vom Prüfling TL zu empfangenden Daten ist dabei in einer "test.H"- Datentypendatei HF definiert, die in der Parameterliste der "RECV"- Anweisung angegeben ist. Ferner wird die Meldung innerhalb von zehn Sekunden erwartet, ansonsten wird durch den Protokollgenerator TFM in den Protokolldateien TF1 und TF2 festgehalten, dass keine Meldung in der vorgesehenen Zeit eingegangen sei. In einem solchen Fall würde anschliessend die nächste Anweisung ausgeführt werden. In gleicher Weise erfolgt eine entsprechende Fehlermeldung, wenn eine falsche Meldung oder ein falscher Meldungstyp empfangen wird. In beiden Fällen wird nach der Fehlerprotokollierung die nächste Anweisung ausgeführt.

Die "RECV"- Anweisung kann auch in vereinfachter Weise eingesetzt werden. Beispielsweise wird die Anweisung
RECV(Signalname, Sec, 10);
dann verwendet, wenn keine Parameter empfangen werden sollen. Ferner kann eine Anweisung
RECV((Mld_A) ∥ (Mld_B,obman_sdl_types.H), Sec, 10);
zum Empfangen einer Meldung angegeben werden, wenn die Reihenfolge der einzutreffenden Meldungen nicht bekannt ist. Trift eine der Meldungen Mld_A oder Mld_B in einem durch die zehn Sekunden definierten Zeitfenster ein, so wird sie protokolliert, ansonsten erscheint eine Warnmeldung in der oben beschriebenen Art. In einer solchen "RECV"- Anweisung können nicht nur zwei Meldungen eingegeben werden, sondern es besteht die Möglichkeit, eine beliebige Anzahl Meldungen einzugeben.

Die Meldung Mld_A in der angegebenen RECV- Anweisung ist - wie im vorletzten Beispiel - parameterlos. Im vorliegenden Fall handelt es sich demzufolge lediglich um ein Signal, das empfangen werden soll.

Schliesslich kann mit der Anweisung
RECV(Any);
der Empfang einer beliebigen Meldung oder eines beliebigen Signals angezeigt werden.

Neben den im angegebenen Beispiel aufgeführten "SEND"-, "RECV"- und "WAIT"-Anweisungen sind weitere Anweisungen wie beispielsweise eine "WRITE"-, eine "IF(TIMEOUT)"-, eine "IF(WARNING)"-, eine "FLAG(...)"-, eine "IF- ELSE"-, eine "FOR(...)"-, eine "INCREMENT"-, eine "REPLACE"- und eine "SHELL"- Anweisung vorgesehen. Im folgenden werden diese anhand von Beispielen weiter erläutert:

Die "WRITE"- Anweisung dient vor allem zum Einfügen von Kommentaren in die Protokolldateien TF1 und TF2 und kann beispielsweise zusammen mit der "IF(TIMEOUT)"-oder der "IF(WARNING)"- Anweisung verwendet werden, wie das folgende Beispiel zeigt: 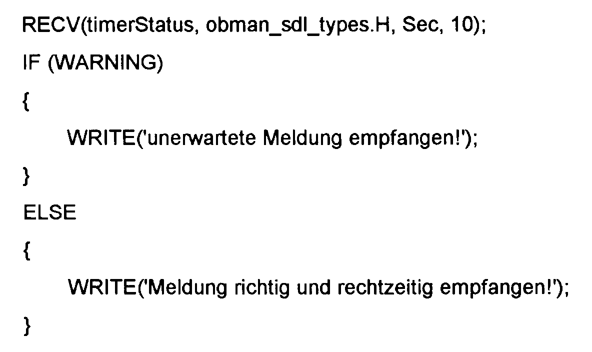
Die "IF(WARNING)"- Anweisung wird hauptsächlich zusammen mit der "RECV"- Anweisung verwendet, um den Ablauf in einer Testumgebung TU steuern zu können.

Die "FLAG(...)"- Anweisung wird zur erwähnten Synchronisierung der eingesetzten Testumgebungen TU, TU2 bis TUn verwendet. Das folgende Beispiel stellt eine Synchronisation der beiden Testumgebungen TU und TU2 dar:
- Testumgebung TU:: WAIT(Sec, 10);
"Befehl X"
FLAG(1, Set);
- Testumgebung TU2:: FLAG(1, Reset);
FLAG(1, Wait);
"Befehl Y"
Während der "WAIT"- Anweisung in der Testumgebung TU löscht die Testumgebung TU2 das "Flag 1" und unterbricht den weiteren Testablauf in der Testumgebung TU2. Die Testumgebung TU führt den "Befehl X" aus und setzt anschliessend "Flag 1", was die Testumgebung TU2 zur Ausführung des "Befehls Y" veranlasst. Die Ausführung von Befehlen in den Testumgebungen TU und TU2 werden somit zwangsweise in eine vorgegebene Reihenfolge gebracht, d.h. die Testumgebungen TU und TU2 werden synchronisiert.

Wie erwähnt, werden zur Überprüfung eines Systems mehrere Testabläufe benötigt, die sich ihrerseits wiederum aus mehreren Meldungsfolgedateien SF für die entsprechenden Testumgebungen TU, TU2 bis TUn zusammensetzen können. Es handelt sich hier also um die Abarbeitung von parallelen Prozessen (Multitasking), die miteinander Kommunizieren und allenfalls auch auf gemeinsame Daten zugreifen, was einen gegenseitigen Ausschluss (mutual exclusion) auf gemeinsame Daten und Resourcen zur Vermeidung von Zugriffskollisionen bedingt. Die Problematik des erfindungsgemässen Verfahrens liegt - wie bei einem (quasi) parallelen Prozess - jedoch besonders beim zeitlichen Synchronisieren der zu sendenden bzw. zu empfangenden Meldungen, was beim Erstellen der Meldungsfolgedateien beachtet werden muss.

In den meisten Fällen ist die chronologische Reihenfolge in bezug auf das Empfangen und das Senden der beteiligten Testumgebungen TU, TU2 bis TUn von tragender Bedeutung. Probleme, die sich beim Erstellen der Meldungsfolgedateien ergeben, wenn keine Synchronisiereinheit TUFM vorhanden ist, werden anhand des folgenden Beispiels aufgezeigt: Trifft eine vom Prüfling TL gesendete Meldung verspätet ein, d.h. nach dem durch die "RECV"-Anweisung definierten Zeitfenster, so wird die Meldung nicht ignoriert - da die Prozessverwaltungseinheit PM nicht weiss, welcher Meldungsempfang erwünscht oder nicht erwünscht ist -, sondern sie wird in die in der Prozessverwaltungseinheit PM vorhandenen Warteliste QU (Fig. 2) eingefügt. Als Konsequenz ergibt sich daraus, dass bei der nächsten "RECV"- Anweisung eine falsche Meldung eingelesen wird, was wiederum bedeutet, dass die Chronologie des weiteren Testablaufes völlig unbestimmt und falsch ist. Abhilfe bringt die erwähnte Synchronisiereinheit TUFM, durch die die zeitliche Synchronisation zusammen mit der Zeitüberwachungseinheit TOG erzwungen wird.

Die "IF-ELSE"- Anweisung ist ein in höheren Programmiersprachen - wie beispielsweise C++ oder PASCAL - überlicherweise verwendetes Sprachelement, mit dem zum Beispiel eine bedingte Verzweigung oder eine Prüfung von Daten einer gesendeten oder empfangenen Datenstruktur vorgenommen wird. Eine mögliche Anwendung dieser Anweisung ist aus dem folgenden Beispiel ersichtlich: 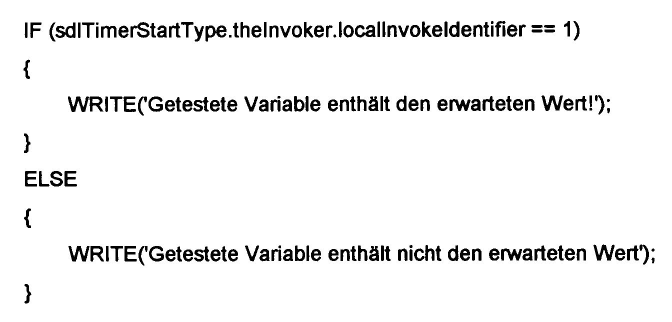
Weitere mögliche Vergleichsoperatoren neben dem Operator "==" sind "!=", ">=", "<=", ">" und "<".

Die "FOR(...)"- Anweisung entspricht der Notation der C- Programmiersprache (siehe "ANSI C", Helmut Herold, TEWI- Verlag, München, 1989, Seiten 346 und 347) mit dem Unterschied, dass keine Variablen für die Grenzen angegeben werden, sondern lediglich die Grenzen selbst: 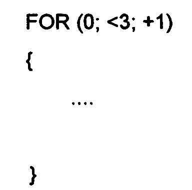
Mit Hilfe der "INCREMENT"- Anweisung kann ein Element einer übermittelten Struktur beliebig verändert werden, bevor die Meldung erneut übermittelt wird. Im folgenden Beispiel wird dies anhand eines Elementes "SdlTimerStartType.theInvoker.locaInvokeIdentifier" gezeigt, dessen Wert um Eins erhöht wird:
INCREMENT(sdlTimerStartType.theInvoker.locaInvokeIdentifier, +1);
Das Element einer Struktur wird dabei wie in den Programmiersprachen C oder C++ referenziert, wobei das erste Wort der Elementenreihenfolge dem Namen des Datentyps entspricht. Der aus der Meldungsdatei MF gelesene Wert wird mit dem neuen Wert überschrieben. Wenn ein Element falsch eingegeben wurde, erscheint eine entsprechende Fehlermeldung und die nächste in der Meldungsfolgedatei SF stehende Anweisung wird ausgeführt.

Die "REPLACE"- Anweisung kann ein Element einer zu sendenden Meldung mit einem Elementwert einer bereits empfangenen Meldung überschreiben. Da die zu sendende Meldung zum Zeitpunkt der empfangenen Meldung, aus der Elementwerte übernommen werden, noch nicht geladen ist, müssen die Datentypendatei HF und die Meldungsdatei MF in der "REPLACE"- Anweisung als Parameter angegeben werden. Ferner müssen die Elemente einer Struktur - analog zu der "INCREMENT"- Anweisung - entsprechend der in den Programmiersprachen C oder C++ definierten Art angegeben werden. Schliesslich wird auch bei der "REPLACE"- Anweisung bei fehlerhaften Angaben für ein Element eine Fehlermeldung erzeugt. Im folgenden soll anhand eines Beispiels die "REPLACE"- Anweisung weiter erläutert werden:
RECV(uint32Signal, q_Q3sys.H, Sec, 10);
REPLACE(obman_sdl_types.H, start_timer.hex, sdlTimerStartType.theInvoker.localInvokeIdentifier, uint32);
SEND(timerStatus, obman_sdl_types.H, start_timer.hex);
Im angegebenen Beispiel wird eine Meldung "uint32Signal" in der Testumgebung mit Daten erwartet, deren Strukturen in der "q_Q3sys.H"- Datentypendatei HF definierten sind, wobei ein Element dieser Struktur vom Typ "uint32" ist. Der Inhalt dieses Elementes soll in einer folgenden an den Prüfling TL zu sendenden Meldung "timerStatus" in ein Element vom Typ "theInvoker.localInvokeIdentifier" übertragen werden. Mit Hilfe der "REPLACE"- Anweisung wird eine Datenanpassung zwischen den unterschiedlichen Datentypen vorgenommen, indem der Inhalt des Elementes vom Typ "theInvoker.localInvokeIdentifier" mit dem empfangenen Wert des Elementes vom Typ "uint32" überschrieben wird. Die angepasste Meldung wird schliesslich mit der "SEND"- Anweisung an den Prüfling TL übermittelt.

Die Einheiten der Testumgebung TU - wie beispielsweise die Testverwaltungseinheit TM und deren Einheiten, die Synchronisiereinheit TUFM, die Prozessverwaltungseinheit PM usw. - laufen als sogenannte Prozesse auf einem oder mehreren miteinander verbundenen leistungsfähigen Computersystemen ab. Zur Steuerung von Grundfunktionen dieser Computersysteme werden in bekannter Weise Betriebssysteme verwendet, auf denen die erwähnten Prozesse ablaufen. Sollen von der Testverwaltungseinheit TM bzw. von der Befehlsverarbeitungseinheit TUCP direkt Befehle an das Betriebssystem gegeben werden, so kann eine "SHELL"- Anweisung in die Meldungsfolgedatei SF eingetragen werden. Wird als Betriebssystem UNIX verwendet, so kann ein Befehl zum Kopieren einer Datei Dat1 in eine Datei Dat2 folgendermassen in die Meldungsfolgedatei SF eingefügt werden:
SHELL('cp dat1 dat2');
Das Ergebnis der Ausführung von solchen Befehlen wird in den Protokolldateien TF1 und TF2 im allgemeinen nicht festgehalten.

Neben den oben beschriebenen Anweisungen, die in der Meldungsfolgedatei SF enthalten sein können, sind weitere Anweisungen denkbar, die zur Beschreibung von Testabläufen sinnvoll sind. Insbesondere sind dies Anweisungen, die in ähnlicher Weise in höheren Programmiersprachen angeboten werden.

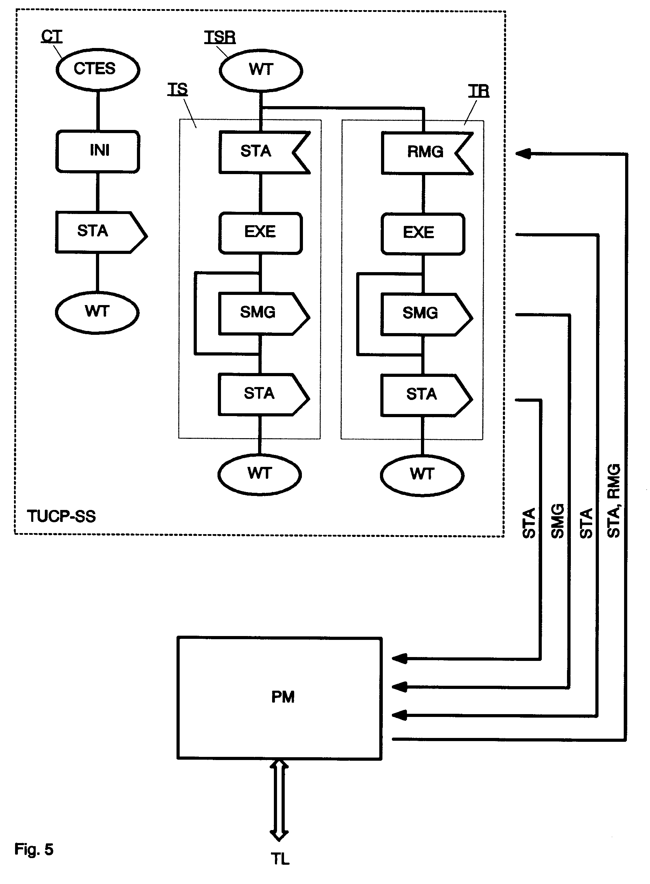

In Fig. 5 ist die SDL++- Schnittstelle TUCP-SS der Befehlsverarbeitungseinheit TUCP in Bezug auf die Prozessverwaltungseinheit PM schematisch dargestellt. Diese SDL++- Schnittstelle TUCP-SS wird mit Hilfe von SDL- Diagrammen beschrieben, wobei die einzelnen Verfahrensschritte bzw. Zustände mit Hilfe von SDL- Symbolen dargestellt sind.

Auf die Prozessverwaltungseinheit PM haben lediglich die zu übertragenden Meldungen STA, SMG und RMG einen Einfluss. Bedeutungslos für die Prozessverwaltungseinheit PM sind alle weiteren Angaben in einem SDL- Diagramm.

Die SDL++- Schnittstelle TUCP-SS ist selbst eine Klasse, welche zu Beginn des Testverfahrens gestartet und am Schluss wiederum gelöscht wird.

Ausgangspunkt des in Fig. 5 mit Hilfe eines SDL- Diagramms dargestellten Testverfahrens ist der Startzustand CTES, der den Anfang einer sogenannten SDL++- Transition CT bildet. Nach einer Initialisierungsphase INI, in der die eigentliche Initialisierung des Testverfahrens vorgenommen wird, wird eine Meldung STA an eine Transition TSR gesendet, die aus zwei Transitionen TS und TR besteht. Wie alle übrigen Meldungen wird auch die Meldung STA über die Warteliste QU (Fig. 2) der Prozessverwaltungseinheit PM übermittelt.

Es ist darauf hinzuweisen, dass die folgenden Verfahrensschritte im Testverfahren anstatt von der Meldung STA auch von einer Meldung RMG ausgelöst werden können. Dargestellt ist dies durch die Verzweigung im die Transition TSR darstellenden SDL- Diagramm in die Transition TS und in die Transition TR. Mit Hilfe solcher Verzweigungen werden in SDL- Diagrammen Alternativen im Verfahrensablauf definiert. Somit können die der Initialisierungsphase INI folgenden Verfahrensschritte beispielsweise auch durch eine vom Prüfling TL stammenden Meldung RMG ausgelöst werden.

Wie aus dem die Transition TS beschreibenden SDL- Diagramm ersichtlich ist, sind die weiteren Verfahrensschritte in beiden Diagrammzweigen nach den empfangenen Meldungen STA und RMG identisch. So folgt in beiden Zweigen zunächst ein Verfahrensschritt EXE, in dem die Aktivierung der Befehlseinheit CGEN (Fig. 4) vorgenommen wird, die ihrerseits die nächste Meldungsklasse aktiviert. Anschliessend ist das Senden einer Meldung SMG allenfalls dann vorgesehen, wenn eine entsprechende SEND- Anweisung in der Meldungsklasse vorhanden ist.

Eine Reaktivierungsmeldung STA, die der optionalen Meldung SMG folgt, wird in jedem Fall - auch wiederum über die Prozessverwaltungseinheit PM - gesendet, damit die SDL++- Schnittstelle TUCP-SS die nächste Anweisung durch die Aktivierung ihrer Meldungsklasse ausführen kann.

Der Vollständigkeit halber - wie bereits erwähnt - sind die SDL- Diagrammzweige mit Wartezustandssymbolen WT abgeschlossen. In diesem Zustand kann das System jederzeit neu aktiviert werden.

## Patentansprüche

1. Verfahren zum Testen eines objektorientierten Systems, wie beispielsweise eines Fernmeldesystems oder Teilen davon, das mindestens aus zwei Klassen (A, B) besteht,
**dadurch gekennzeichnet**,
dass ein zumindest aus einer Klasse (A) bestehender Prüfling (TL) mit Hilfe mindestens einer je zu einer Testumgebung (TU, TU2, ..., TUn) gehörenden Testverwaltungseinheit (TM, TM2, ..., TMn), die mindestens eine der das objektorientierte System bildenden Klassen (B) ersetzt, getestet wird,
dass eine Prozessverwaltungseinheit (PM) vorgesehen ist, die Meldungen (Mk) vom Prüfling (TL) an die Klasse (B) in Meldungen (Mm) umwandelt und an die Testverwaltungseinheit (TM, TM2, ..., TMn) umleitet und
dass Meldungen (Mi) von der Testverwaltungseinheit (TM, TM2, ..., TMn) über die Prozessverwaltungseinheit (PM) an den Prüfling (TL) gesendet werden.

2. Verfahren nach Anspruch 1, **dadurch gekennzeichnet**, dass die Meldungen (Mk, Mi, Mm) zwischen den Klassen (A, B) bzw. dem Prüfling (TL) und der Testverwaltungseinheit (TM, TM2, ..., TMn) und/oder Meldungen (M3, M4) innerhalb einer dieser Klassen (A, B, TL, TM, TM2, ..., TMn) über die Prozessverwaltungseinheit (PM) geführt werden.

3. Verfahren nach Anspruch 1 oder 2, **dadurch gekennzeichnet**, dass die über die Prozessverwaltungseinheit (PM) geführten Meldungen (Mk, Mi, Mm, M3, M4) zunächst in eine Warteliste (QU) eingetragen und anschliessend entsprechend ihrer Priorität behandelt werden.

4. Verfahren nach einem der vorangehenden Ansprüche, **dadurch gekennzeichnet**, dass, im Falle von mehreren Testumgebungen (TU, TU2, ..., TUn), mindestens zwei davon mit Hilfe einer Synchronisiereinheit (TUFM) synchronisiert werden.

5. Verfahren nach einem der vorangehenden Ansprüche, **dadurch gekennzeichnet**,
dass Daten, die in den Meldungen (Mk, Mi, Mm, M1, ..., M5) übertragen werden sollen, mit Hilfe einer in der Testumgebung (TU, TU2, ..., TUn) enthaltenen Meldungseingabeeinheit (ME) eingegeben werden,
dass dabei die Daten in eine Meldungsdatei (MF) abgelegt werden, wobei die Datenstrukturen in einer Datentypendatei (HF) vorgegeben sind,
dass die Meldungen (Mk, Mi, Mm, M1, ..., M5) mit Bezug auf die zu übertragenden Daten und deren Strukturen in einer Meldungsfolgedatei (SF) enthalten sind und
dass die Testverwaltungseinheit (TM, TM2, ..., TMn) aufgrund der Datentypendatei (HF), der Meldungsdatei (MF) und der Meldungsfolgedatei (SF) gesteuert wird.

6. Verfahren nach einem der vorangehenden Ansprüche, **dadurch gekennzeichnet**, dass die Testverwaltungseinheit (TM, TM2, ..., TMn) mindestens eine Protokolldatei (TF1, TF2) erzeugt.

7. Verfahren nach einem der vorangehenden Ansprüche, **dadurch gekennzeichnet**, dass in der Testverwaltungseinheit (TM, TM2, ..., TMn) ein Zeitfenster, in dem der Eingang einer Meldung (Mk bzw. Mi) vom Prüfling (TL) erwartet wird, überwacht wird, wobei nach Ablauf einer das Zeitfenster definierenden Zeit ein Fehlverhalten festgehalten wird.

8. Verfahren nach einem der vorangehenden Ansprüche, **dadurch gekennzeichnet**, dass eine Schnittstelle (TUCP-SS) zwischen der Testverwaltungseinheit (TM, TM2, ..., TMn) und dem Prüfling (TL) bzw. der Prozessverwaltungseinheit (PM) mit einer Programmiersprache SDL++ (Specification and Description Language) beschrieben wird.

9. Verfahren nach Anspruch 8, **dadurch gekennzeichnet**, dass die mit der Programmiersprache SDL++ beschriebenen Abläufe mit Hilfe eines ersten Übersetzungsprogramms in eine zweite Programmiersprache übersetzt werden, mit deren Hilfe auch die zu testenden Klassen (A) beschrieben wurden, und dass mit Hilfe eines zweiten Übersetzungsprogramms die mittels der zweiten Programmiersprache definierten Abläufe in eine maschinenlesbare Form übersetzt werden.

10. Vorrichtung zur Durchführung des Verfahrens nach einem der Ansprüche 1 bis 9 bestehend aus einem Prüfling (TL) und mindestens einer Testumgebung (TU, TU2, ..., TUn), **dadurch gekennzeichnet**, dass der Prüfling (TL) über eine Prozessverwaltungseinheit (PM) mit in den Testumgebungen (TU, TU2, ..., TUn) enthaltenen Testverwaltungseinheiten (TM, TM2, ..., TMn) verbunden ist und dass, falls mehr als eine Testumgebung (TU, TU2, ..., TUn) vorgesehen ist, mindestens eine Synchronisiereinheit (TUFM) zwischen den Testumgebungen (TU, TU2, ..., TUn) vorhanden ist.

11. Vorrichtung nach Anspruch 10, **dadurch gekennzeichnet**, dass die Testverwaltungseinheit (TM, TM2, ..., TMn) aus einer Befehlsverarbeitungseinheit (TUCP), einem Meldungsfolgegenerator (SGEN) und einem Protokollgenerator (TFM) besteht, dass die Befehlsverarbeitungseinheit (TUCP) auf der einen Seite mit der Prozessverwaltungseinheit (PM) und einer allfälligen Synchronisiereinheit (TUFM) und auf der anderen Seite mit dem Protokollgenerator (TFM) und dem Meldungsfolgegenerator (SGEN) verbunden ist, in dem die Meldungen (Mi) an den Prüfling (TL) aus der Datentypendatei (HF), der Meldungsdatei (MF) und der Meldungsfolgedatei (SF) generiert werden.

12. Vorrichtung nach Anspruch 10 oder 11, **dadurch gekennzeichnet**, dass der Meldungsfolgegenerator (SGEN) aus einer Befehlseinheit (CGEN), einer Meldungsdateiverwaltungseinheit (MFM) und einer Meldungsfolgeverwaltungseinheit (SFM) besteht, dass die Meldungsdateiverwaltungseinheit (MFM) auf Angaben in der Datentypen(HF) und in der Meldungsdatei (MF) zugreift, dass die Meldungsfolgeverwaltungseinheit (SFM) auf Angaben in der Meldungsfolgedatei (SF) zugreift, dass die Meldungsdateiverwaltungseinheit (MFM) und die Meldungsfolgeverwaltungseinheit (SFM) zur Übergabe von Informationen je mit der Befehlseinheit (CGEN) verbunden sind, wobei die Befehlseinheit (CGEN) mit der Befehlsverarbeitungseinheit (TUCP) verbunden ist.

13. Vorrichtung nach einem der vorangehenden Ansprüche, **dadurch gekennzeichnet**, dass die Befehlsverarbeitungseinheit (TUCP) mit einer Zeitüberwachungseinheit (TOG) verbunden ist.
